(19) Europäisches Patentamt / European Patent Office / Office européen des brevets

(11) **EP 3 314 319 B1**

(12) **FASCICULE DE BREVET EUROPEEN**

(45) Date de publication et mention de la délivrance du brevet:
**28.08.2019 Bulletin 2019/35**

(21) Numéro de dépôt: **16735923.1**

(22) Date de dépôt: **20.06.2016**

(51) Int Cl.:
*G02B 6/122* *(2006.01)*        *G01N 21/03* *(2006.01)*

(86) Numéro de dépôt international:
**PCT/FR2016/051503**

(87) Numéro de publication internationale:
**WO 2016/207530 (29.12.2016 Gazette 2016/52)**

(54) **GUIDE OPTIQUE**

OPTISCHER LEITER

OPTICAL GUIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2015 FR 1555755**

(43) Date de publication de la demande:
**02.05.2018 Bulletin 2018/18**

(73) Titulaires:
- **Université Claude Bernard Lyon 1**
  **69100 Villeurbanne (FR)**
- **Centre National de la Recherche Scientifique**
  **75794 Paris Cedex 16 (FR)**
- **Institut National des Sciences Appliquées de Lyon**
  **69621 Villeurbanne (FR)**
- **CPE Lyon Formation Continue et Recherche - CPE Lyon FCR**
  **69100 Villeurbanne (FR)**
- **Ecole Centrale De Lyon**
  **69134 Ecully Cedex (FR)**

(72) Inventeur: **OROBTCHOUK, Régis**
**38490 Fitilieu (FR)**

(74) Mandataire: **GIE Innovation Competence Group**
**310, avenue Berthelot**
**69372 Lyon Cedex 08 (FR)**

(56) Documents cités:
**WO-A1-2014/058392      FR-A1- 2 623 635**
**US-A1- 2004 252 957**

## Description

La présente invention concerne un guide optique, notamment compatible avec les technologies CMOS de l'industrie microélectronique.

Les différentes fonctionnalités photoniques sur puce micro-nano-électronique nécessitent un ensemble de briques de base performantes pour l'analyse et la gestion des signaux optiques comme des photo-détecteurs, des filtres, des modulateurs, des réseaux de couplage entrée/sortie (I/O), et, bien sûr, des guides optiques dans le proche infrarouge pour adresser notamment les principales bandes télécom.

L'intégration à large échelle de ces dispositifs sur silicium implique des solutions technologiques ouvrant la voie à la production de dispositifs très compacts, tout en préservant leur efficacité de fonctionnement, gage indispensable d'une consommation de puissance modérée combinée à une très haute vitesse d'opération.

De façon traditionnelle, dans un guide optique formé par une fibre optique, un coeur de plus fort indice est entouré par une gaine de plus faible indice. Par le phénomène de la réflexion totale interne, un rayon de lumière peut être guidé sur de longues distances.

Plus récemment, dans le début des années 2000, un guide optique plan ou en ruban (« slot waveguide » en anglais) a été développé. Dans ce type de guide, une fine couche d'un matériau à plus faible indice de réfraction (par exemple du $BaTiO_3$, ou du BTO), formant la « fente » ou le « slot » est placée entre deux matériaux à plus fort contraste d'indice de réfraction (par exemple du silicium). Dans ce cas, la majeure partie de l'énergie lumineuse est localisée dans la fine couche du matériau à indice de réfraction plus faible. Il s'agit d'un mode particulier qui n'existe que pour une polarisation TM de la lumière du fait d'une discontinuité du champ électrique aux interfaces des deux matériaux. Le confinement latéral de la lumière de ce mode se produit sous la couche superficielle du matériau à plus fort indice de réfraction.

Ce guide optique permet donc de guider de la lumière dans un milieu à indice de réfraction plus faible, mais toujours sous un milieu à indice de réfraction plus fort.

Un autre guide optique concerne les guides d'onde optique en antirésonance réfléchissant désigné en anglais par le terme « ARROW » pour « anti-reflecting resonant optical waveguide ».

Un guide ARROW est par exemple formé d'un substrat de silicium sur isolant (SOI) recouvert d'une couche de silice gravée latéralement pour former le guide d'onde.

La couche de silicium superficielle du matériau SOI doit être d'une épaisseur de λ/4 pour former ainsi une cavité anti-résonnante qui réfléchit et guide la lumière.

Ce guide permet un guidage de la lumière dans le matériau à indice plus faible, mais uniquement pour une polarisation TE de la lumière. Il est à noter que même si l'indice de réfraction du matériau guidant est plus faible que celui du substrat, il reste néanmoins plus fort que celui du matériau environnant et sa géométrie reste la même qu'un guide d'onde conventionnel en forme de plot ou muret. Un guide d'onde de la technique antérieure est illustré par le document US2004/252957.

La présente invention vise à proposer un guide optique différent permettant un guidage de lumière au moins partiellement dans un matériau à indice de réfraction plus faible en particulier dans une géométrie non conventionnelle en forme de cuvette.

A cet effet, l'invention propose un guide optique comprenant une couche d'isolant, une première couche d'un matériau ayant un indice de réfraction $n_1$, une deuxième couche d'un matériau ayant un indice de réfraction $n_2$ et une épaisseur $e_2$ et au moins un premier et un second murets ayant un indice de réfraction $n_3$, la première couche étant disposée sur la couche d'isolant, la deuxième couche sur la première couche et les murets étant disposés sur la deuxième couche, possédant une largeur w, espacés d'une distance d, $n_4$ étant l'indice de réfraction dans l'espace entre les murets et au-dessus de la deuxième couche dans lequel :

- 
$$(n_1 - n_2) \geq 0{,}1,$$

- 
$$(n_3 - n_2) \geq 0{,}1,$$

- $n_4 < n_3$,

- $n_3\lambda/4 \leq \underline{w} \leq n_3\lambda/2$,

- $n_4\lambda/10 \leq \underline{d} \leq 3n_4\lambda$,

- $e_2 \leq n_2\lambda/5$,

- λ étant la longueur d'onde de la lumière destinée à se propager dans le guide optique.

On obtient ainsi un guide optique hybride slot-ARROW, c'est-à-dire un guide hybride plan en antirésonance réfléchissant.

Dans ce guide optique, le mode guidé est fortement confiné dans la deuxième couche.

Le guide optique selon l'invention est facilement intégrable dans une technologie planaire de semi-conducteur.

Le guide optique selon l'invention est similaire à un guide optique plasmonique connu, mais ses pertes sont largement inférieures, notamment trois ordres de grandeur inférieures à celle d'un guide optique plasmonique.

De plus, le guide optique selon l'invention peut être facilement être utilisé pour la réalisation de détecteurs bio-photoniques, notamment pour obtenir une interaction entre un fluide biologique et le mode guidé du guide optique selon l'invention.

Le guide optique selon l'invention se distingue également par sa compacité et sa compatibilité avec les technologies CMOS traditionnelles.

Le guide optique selon l'invention peut comporter une ou plusieurs des caractéristiques suivantes prises seules ou en combinaison :

Pour une longueur d'onde autour des longueurs d'ondes de télécommunications, en particulier autour de $\lambda$ =1,55um, les paramètres peuvent être choisis comme suit :

-   $n_1 \geq 3$,

-   $n_2 \leq 2,6$,

-   $n_3 \geq 3$,

-   $0,4\mu m \leq \underline{w} \leq 0,7\mu m$

-   $0,2\mu m \leq \underline{d} \leq 5\mu m$

-   $e_2 \leq 200nm$, notamment $e_2 \leq 100nm$.

Et dans les mêmes conditions de longueur d'ondes de télécommunications, en particulier autour de $\lambda$ =1,55$\mu m$, n4 $\leq$ 1,5.

Selon un aspect, l'espace entre les murets et au-dessus de la deuxième couche est destiné à être rempli d'une substance.

La première couche comprend par exemple une couche de silicium .

Ainsi, la première couche de silicium et la couche d'isolant peuvent être réalisées sous forme d'une plaquette SOI.

Selon un autre aspect, la première couche possède une épaisseur $\eta_1\lambda/20 \leq e_1 \leq n_1\lambda/5$.

La deuxième couche comprend par exemple un composant diélectrique du groupe suivant : BTO, $Ta_2O_5$, $SiO_2$, $PbF_2$ qui peut en outre être dopé par de l'aluminium, du gallium ou de l'indium.

Selon encore un autre aspect, la deuxième couche comprend un mélange d'au moins deux composants diélectriques choisi dans le groupe suivant : BTO, $Ta_2O_5$, $SiO_2$, $PbF_2$.

Pour une longueur d'onde autour des longueurs d'ondes de télécommunications, en particulier autour de $\lambda$ =1,55$\mu m$, la deuxième couche possède une épaisseur $e_2$ comprise entre 20nm et 50nm, notamment 30nm.

Les murets sont par exemple réalisés en silicium amorphe, en particulier en silicium amorphe hydrogéné.

Pour une longueur d'onde autour des longueurs d'ondes de télécommunications, en particulier autour de $\lambda$ =1,55$\mu m$, les murets possèdent une largeur $\underline{w}$ inférieure ou égale à 0,7$\mu m$ comprise entre 0,5$\mu m$ et 0,7$\mu m$,

notamment 0,6$\mu m$ en étant espacés entre 0,2$\mu m$ et 5$\mu m$, notamment entre 1,6$\mu m$ et 2$\mu m$, en particulier 1,75$\mu m$.

Selon encore un autre aspect, la hauteur $\underline{h}$ des murets est $\lambda/10 \leq \underline{h} \leq \lambda/5$, ce qui donne pour une longueur d'onde autour des longueurs d'ondes de télécommunications, en particulier autour de $\lambda$ =1,5 5um, que la hauteur $\underline{h}$ des murets peut être comprise entre 150nm inclus et 250nm inclus, en particulier 200nm.

On peut prévoir que la substance entre les murets est un fluide liquide ou un fluide gazeux.

Le guide optique peut comprendre en outre un coupleur optique guide à guide.

L'invention concerne également un capteur de détection optique, caractérisé en ce qu'il comprend un guide optique tel que défini ci-dessus.

L'invention concerne également un composant photonique caractérisé en ce qu'il comprend un guide optique tel que défini ci-dessus.

D'autres avantages et caractéristiques apparaîtront à la lecture de la description de l'invention, ainsi que des figures suivantes parmi lesquelles :

-   la figure 1 est un schéma en perspective d'un mode de réalisation d'un guide optique selon l'invention,

-   la figure 2 est un diagramme montrant selon une vue en coupe l'indice de réfraction d'un mode de réalisation d'un guide optique selon l'invention,

-   la figure 3 est un diagramme montrant selon une vue en coupe le profil de puissance d'un mode optique guidé dans le guide optique de la figure 2,

-   la figure 4 est un diagramme montrant selon une vue en coupe l'indice de réfraction d'un autre mode de réalisation d'un guide optique selon l'invention,

-   la figure 5 est un diagramme montrant selon une vue en coupe le profil de puissance d'un mode optique guidé dans le guide optique de la figure 4,

-   la figure 6 est un diagramme montrant selon une vue en coupe l'indice de réfraction d'un mode de réalisation d'un guide optique selon l'invention avec un coupleur,

-   la figure 7 est une vue de dessus d'un schéma d'un guide optique de la figure 6 avec son coupleur.

Sur les figures, les éléments identiques sont identifiés par les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la description on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description.

Par indice de réfraction n, on entend dans la présente description l'indice de réfraction à la longueur d'onde $\lambda$ destiné à se propager dans le guide optique selon l'invention, en particulier dans l'infrarouge, notamment, mais pas exclusivement à des longueurs d'onde de transmission du domaine des télécommunications aux alentours de $1,5\mu m$ donné à titre d'exemple. La présente invention est également utilisable dans toutes autres gammes de longueurs d'onde.

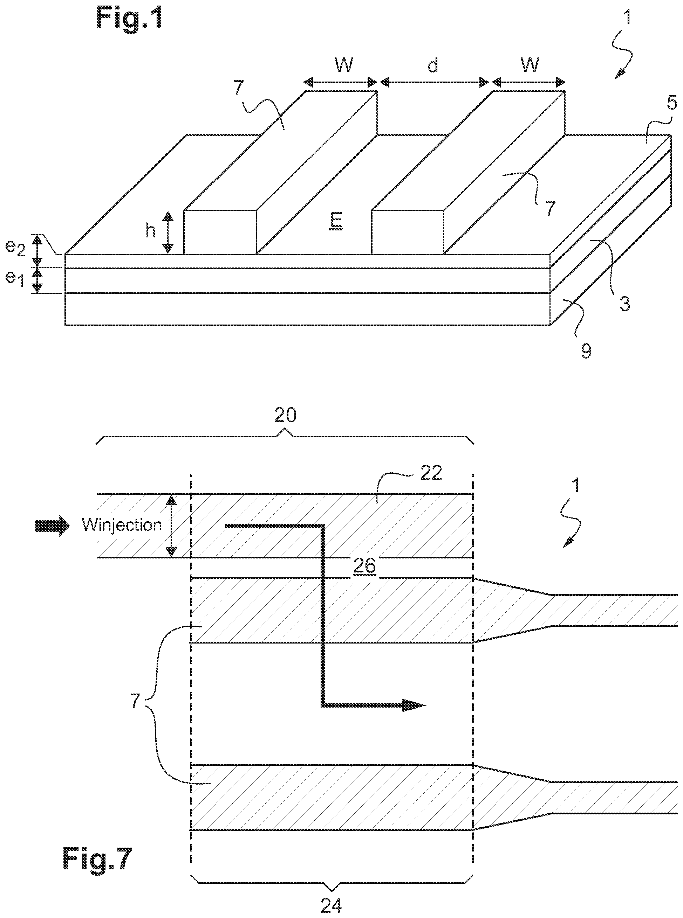

La figure 1 montre un mode de réalisation d'un guide optique 1 selon l'invention.

Ce guide optique 1 comprend une couche d'isolant 9, une première couche 3 d'un matériau ayant un indice de réfraction $n_1$, une deuxième couche 5 d'un matériau ayant un indice de réfraction $n_2$ et une épaisseur $e_2$ et au moins un premier et un second murets 7 ayant un indice de réfraction $n_3$, la première couche 3 étant disposée sur la couche d'isolant 9, la deuxième couche 5 sur la première couche 3 et les murets 7 étant disposés sur la deuxième couche 5 possédant une largeur w. Les deux murets 7 sont espacés d'une distance d et n4 est l'indice de réfraction dans l'espace E entre les murets 7 et au-dessus de la deuxième couche 5.

On choisit les paramètres ci-dessus de manière que :

- 
$$(n_1 - n_2) \geq 0,1,$$

- 
$$(n_3 - n_2) \geq 0,1,$$

- $n_4 < n_3$,

- $n_3\lambda/4 \leq \underline{w} \leq n_3\lambda/2$,

- $n_4\lambda/10 \leq \underline{d} \leq 3n_4\lambda$,

- $e_2 \leq n_2\lambda/5$,

- $\lambda$ étant la longueur d'onde de la lumière destinée à se propager dans le guide optique.

Pour une longueur d'onde autour des longueurs d'ondes de télécommunications, en particulier autour de $\lambda = 1,55\mu m$, on préconise les valeurs suivantes :

- $n_1 \geq 3$,

- $n_2 \leq 2,6$,

- $n_3 \geq 3$,

- $0,4\mu m \leq \underline{w} \leq 0,7\mu m$

- $0,2\mu m \leq \underline{d} \leq 5\mu m$

- $e_2 \leq 200nm$, notamment $e_2 \leq 100nm$.

Les murets 7 sont en particulier de structure identique et s'étendent parallèlement l'un à l'autre.

En particulier pour une application de détecteur, l'espace $\underline{E}$ entre les murets 7 et au-dessus de la deuxième couche 5 est destiné à être rempli d'une substance ou d'un échantillon de mesure ayant notamment un indice de réfraction $n \leq 1,5$, comme par exemple d'un fluide liquide tel qu'un liquide biologique à analyser ou un fluide gazeux tel qu'un flux d'air à analyser.

La première couche 3 comprend notamment une couche de silicium (n=3,5) déposée sur une couche 9 d'un isolant (par exemple du $SiO_2$). Ainsi, la première couche 3 de silicium et la couche 9 d'isolant sont par exemple réalisées sous forme d'une plaquette SOI (« Silicium On Isolator » en anglais pour silicium sur isolant).

La première couche 3 de silicium possède une épaisseur $e_1$ :

$\eta_1\lambda/20 \leq e_1 \leq n_1\lambda/5$, c'est-à-dire pour une longueur d'onde dans le domaine des télécommunications, $e_1$ est comprise entre 80nm et 150nm, notamment 100nm.

La deuxième couche 5 comprend par exemple un composant diélectrique du groupe suivant : BTO (de l'oxyde de titane bismuth comme par exemple $Bi_4Ti_3O_{12}$,), $Ta_2O_5$, $SiO_2$, $PbF_2$.

Pour ajuster finement l'indice de réfraction à l'application visée, le composant diélectrique peut être dopé par de l'aluminium, du gallium ou de l'indium. On cite par exemple du $Bi_{3,25}Al_{0,75}Ti_3O_{12}$ (BTO :Al), $Bi_{3,25}Ga_{0,75}Ti_3O_{12}$ (BTO :Ga) et $Bi_{3,25}Al_{0,75}Ti_3O_{12}$ (BTO :Al).

Selon une autre variante, la deuxième couche 5 comprend un mélange d'au moins deux composants diélectriques choisi dans le groupe suivant : BTO, $Ta_2O_5$, $SiO_2$, $PbF_2$.

Selon des technologies récentes, on peut ainsi déposer deux matériaux dans des proportions arbitraires pour obtenir l'indice de réfraction souhaité. En combinant par exemple du $Ta_2O_5$ et du $SiO_2$, on peut obtenir n'importe quel indice compris entre n= 2,1 et 1,45.

La deuxième couche 5 possède pour une longueur d'onde autour des longueurs d'ondes de télécommunications, en particulier autour de $\lambda = 1,55\mu m$, une épaisseur $e_2$ comprise entre 20nm inclus et 50nm inclus, notamment 30nm.

L'inventeur a constaté que plus l'épaisseur $e_2$

et l'indice de réfraction de la deuxième couche 5 sont faibles, plus l'effet « slot-ARROW » du mode hybride est important.

Les murets 7 sont par exemple réalisés en silicium amorphe, en particulier en silicium amorphe hydrogéné (a-Si:H) (n=3,5).

Pour une longueur d'onde autour des longueurs d'ondes de télécommunications, en particulier autour de $\lambda$ =1,55$\mu$m, la largeur w des murets 7 est inférieure ou égale à 0,7$\mu$m, comprise entre 0,5$\mu$m et 0,7$\mu$m, notamment 0,6$\mu$m et la distance d entre les murets 7 est comprise entre 0,2um et 5$\mu$m, notamment 1,6$\mu$m et 2$\mu$m, en particulier 1,75$\mu$m.

La hauteur h des murets 7 est $\lambda/10 \leq h \leq \lambda/5$, ce qui fait pour des longueurs d'ondes de télécommunications, en particulier autour de $\lambda$ =1,55$\mu$m, que h comprise entre 150nm inclus et 250nm inclus, en particulier 200nm.

La réalisation d'un guide optique selon l'invention tel que décrit ci-dessus est assez simple car il suffit de déposer selon une technologie compatible CMOS la deuxième couche 5 sur la première couche 3, puis de déposer sur la deuxième couche 5 une couche dans le matériau des murets 7. Puis, par exemple par un processus de gravure, on enlève le trop de matière pour former les murets 7.

Le guide optique selon l'invention tel que décrit ci-dessus peut être intégré dans un capteur de détection optique présentant notamment un émetteur comme un laser (diode laser) et un détecteur (une photodiode) pour mesurer notamment les fluctuations de couplage de la lumière du mode guide vers un fluide (de l'eau, un gaz, un fluide biologique) qui est conduit dans l'espace E entre les deux murets 7. Etant donné les faibles pertes du guide optique selon l'invention, la longueur de l'espace E (dans le sens longitudinal des murets 7) peut être assez importante offrant de ce fait une surface d'interaction maximisée entre le mode optique guidé et le fluide à analyser. On peut ainsi obtenir une sensibilité très forte du capteur de détection.

On comprend que l'on peut ainsi fabriquer un capteur de détection optique de très petites dimensions. On peut ainsi réaliser un « laboratoire sur puce » avec plusieurs détecteurs.

Le guide optique selon l'invention tel que décrit ci-dessus peut servir à fabriquer d'autres composants photoniques comme par exemple des sources LED bas coût en photonique sur silicium. Dans ce cas, la deuxième couche comprend un matériau actif, comme par exemple une couche de silice dopée erbium. Une cavité résonante, comme par exemple un résonateur en anneau peut être utilisée pour augmenter l'efficacité de la LED.

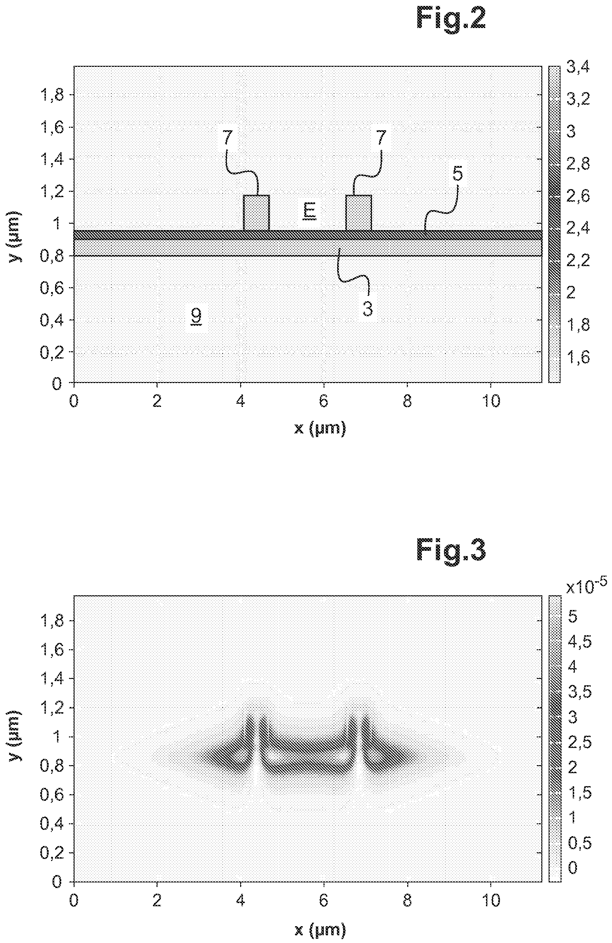

La figure 2 est un diagramme montrant selon une vue en coupe l'indice de réfraction d'un mode de réalisation d'un guide optique selon l'invention.

La première couche 3 est formée de silicium d'une épaisseur de 100nm, la deuxième couche 5 est formée par du BTO (n=2,48) d'une épaisseur de 30nm.

Les murets 7 possèdent une largeur de 0,6$\mu$m, une hauteur de 250nm et sont espacé de 1,6$\mu$m.

La figure 3 est un diagramme montrant selon une vue en coupe le profil de puissance d'un mode optique guidé dans le guide optique de la figure 2, le mode « slot-ARROW ».

On constate que le guide optique 1 permet de guider de la lumière avec de faibles pertes dans un milieu faible indice de réfraction déposé sur un substrat fort indice de réfraction sans ajout d'une couche au-dessus du guide, là où normalement la lumière ne devrait pas être guidée.

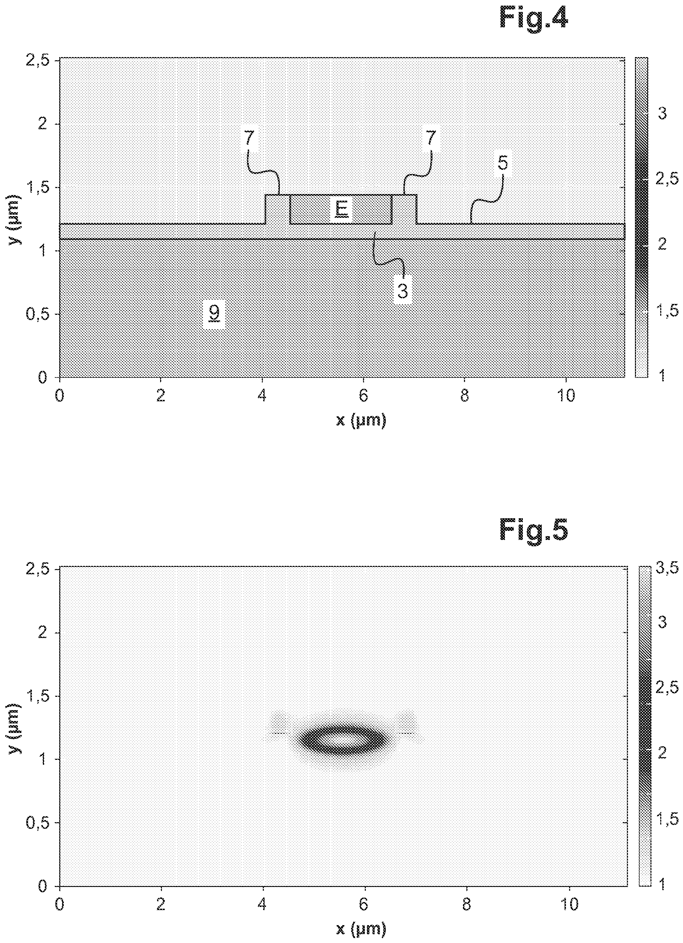

La figure 4 est un diagramme montrant selon une vue en coupe l'indice de réfraction d'un autre mode de réalisation d'un guide optique selon l'invention.

Pour ce mode de réalisation, le guide optique 1 comprend un substrat SOI avec sa couche isolante 9 et une première couche 3 de silicium d'une épaisseur $e_1$ de 100nm. Sur cette première couche 3 est déposée la deuxième couche 5 en silice (n=1,45) avec une épaisseur $e_2$ de 20nm. Les murets 7 sont ensuite obtenus par dépôt d'une couche de silicium amorphe hydrogéné (a-Si : H) d'une épaisseur de 250nm (correspondant à la hauteur h des murets 7) suivi d'un processus de gravure. La largeur des murets est égale à w=0,48$\mu$m et l'espacement entre les murets 7 est de d=2um.

Pour cet exemple de réalisation, on considère que la substance dans l'espace E entre les murets 7 est de l'eau devant être analysée.

La figure 5 est un diagramme montrant selon une vue en coupe le profil de puissance d'un mode optique guidé dans le guide optique de la figure 4.

On peut constater que le mode présente un maximum de puissance entre les deux murets 7 avec une partie très importante d'énergie dans l'espace E formant une cellule d'analyse et contenant de l'eau. La fraction d'énergie contenue dans l'eau, donc dans la cellule d'analyse est beaucoup plus importante que pour un guide de silicium de l'état de la technique que l'on aurait placé dans la cellule d'analyse.

On peut voir également sur la figure 5, que de l'énergie lumineuse est également présente dans la seconde couche 5 formée par une fine couche de silice située sous les murets 7 en silicium amorphe hydrogéné.

Cet effet a également été observé si le fluide dans l'espace E est de l'air par exemple pour un dispositif de détection d'un gaz.

L'inventeur a en outre observé qu'en fonction de la largeur w des murets 7, on peut régler la proportion de quantité de lumière qui est contenue dans l'espace E formant « la partie ARROW » ou dans la partie slot (la seconde couche 5) du mode hybride.

Si l'espacement d entre les murets 7 est choisi entre 0,2$\mu$m et 5,0$\mu$m, le mode hybride « Slot-ARROW » guidé par le guide optique 1 reste mono-mode.

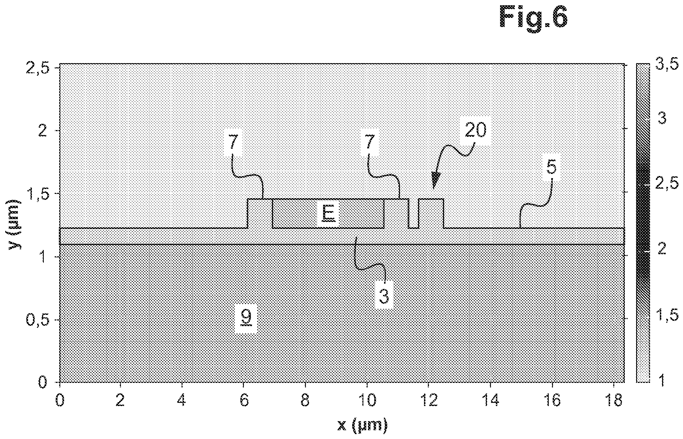

Les figures 6 et 7 sont relatives à un mode de réalisation d'un guide optique 1 avec un coupleur optique 20 pour coupler de la lumière dans ce guide optique 1 de la figure 4.

Plus précisément, la figure 6 est un diagramme (similaire à ceux des figures 2 et 4) montrant selon une vue en coupe l'indice de réfraction d'un mode de réalisation d'un guide optique 1 selon l'invention avec un exemple d'un coupleur optique 20.

La figure 7 est une vue de dessus de la figure 6 montrant le guide optique 1 de la figure 4 avec son coupleur optique 20.

Le coupleur optique 20 est un coupleur guide-à-guide. Comme on le voit sur la figure 7, un guide d'injection 22 qui reçoit la lumière d'une source de lumière, comme par exemple d'un laser, est réalisé sous forme d'un guide ruban (« slot » en anglais) d'une largeur $w_{injection}$ = 0,62 μm et est disposé en parallèle des deux murets 7.

L'extrémité de couplage 24 du guide optique 1 comprend des murets 7 élargis à $\underline{w}$= 0,62 μm dans une zone de couplage 26 d'une longueur de couplage $L_c$ = 86um. Le guide d'injection 22 est disposé à une distance de 0,4 μm d'un des murets 7 du guide optique 1.

Puis après la zone de couplage 26, la largeur des murets 7 se réduit progressivement à w= 0,48um pour maximiser la puissance dans l'espace $\underline{E}$ entre les deux murets 7.

On comprend donc que le guide optique 1 selon l'invention permet de guider de la lumière avec de très faibles pertes dans un milieu à indice de réfraction plus faible en mariant de manière astucieuse l'effet slot et l'effet ARROW dans un unique guide optique.

Le guide optique selon l'invention se distingue en particulier par sa simplicité de structure et sa compatibilité avec les technologies CMOS.

**Revendications**

1. Guide optique (1) comprenant, une couche d'isolant (9), une première couche (3) d'un matériau ayant un indice de réfraction $n_1$, une deuxième couche (5) d'un matériau ayant un indice de réfraction $n_2$ et une épaisseur $e_2$ et au moins un premier et un second murets (7) ayant un indice de réfraction $n_3$, la première couche (3) étant disposée sur la couche d'isolant (9), la deuxième couche (5) sur la première couche (3) et les murets (7) étant disposés sur la deuxième couche (5), possédant une largeur w, espacés d'une distance d, $n_4$ étant l'indice de réfraction dans l'espace (E) entre les murets (7) et au-dessus de la deuxième couche (5) **caractérisé en ce que** :

    -

$$(n_1 - n_2) \geq 0,1,$$

    -

$$(n_3 - n_2) \geq 0,1,$$

    - $n_4 < n_3$,
    - $n_3\lambda/4 \leq \underline{w} \leq n_3\lambda/2$
    - $n_4\lambda/10 \leq \underline{d} \leq 3n_4\lambda$
    - $e_2 \leq n_2\lambda/5$.
    - $\lambda$ étant la longueur d'onde de la lumière destinée à se propager dans le guide optique.

2. Guide optique (1) selon la revendication 1, pour une longueur d'onde autour des longueurs d'ondes de télécommunications, en particulier autour de $\lambda$ =1,55μm, dans lequel

    - $n_1 \geq 3$,
    - $n_2 \leq 2,6$,
    - $n_3 \geq 3$,
    - $0,4\mu m \leq w \leq 0,7um$
    - $0,2\mu m \leq \underline{d} \leq 5\mu m$
    - $e_2 \leq 200nm$, notamment $e_2 \leq 100nm$.

3. Guide optique selon la revendication 1 ou 2, **caractérisé en ce que** pour une longueur d'onde autour des longueurs d'ondes de télécommunications, en particulier autour de $\lambda$ =1,55μm, $n_4 \leq 1,5$.

4. Guide optique selon l'une quelconque des revendications 1 à 3, **caractérisé en ce que** l'espace (E) entre les murets (7) et au-dessus de la deuxième couche (5) est destiné à être rempli d'une substance.

5. Guide optique selon l'une quelconque des revendications 1 à 4, **caractérisé en ce que** la première couche (3) comprend une couche de silicium .

6. Guide optique selon la revendication 5, **caractérisé en ce que** la première couche (3) de silicium et la couche d'isolant (9) sont réalisées sous forme d'une plaquette SOI.

7. Guide optique selon l'une quelconque des revendications 1 à 6, **caractérisé en ce que** la première couche (3) possède une épaisseur $\eta_1\lambda/20 \leq e_1 \leq n_1\lambda/5$.

8. Guide optique selon l'une quelconque des revendications 1 à 7, **caractérisé en ce que** la deuxième couche (5) comprend un composant diélectrique du groupe suivant : $BTO$, $Ta_2O_5$, $SiO_2$, $PbF_2$.

9. Guide optique selon la revendication 8, **caractérisé en ce que** le composant diélectrique est dopé par de l'aluminium, du gallium ou de l'indium.

10. Guide optique selon la revendication 8 ou 9, **caractérisé en ce que** la deuxième couche (5) comprend un mélange d'au moins deux composants diélectriques choisi dans le groupe suivant : BTO, $Ta_2O_5$, $SiO_2$, $PbF_2$.

11. Guide optique selon l'une quelconque des revendications 1 à 10, **caractérisé en ce que** pour une longueur d'onde autour des longueurs d'ondes de télécommunications, en particulier autour de $\lambda$ =1,55$\mu$m, la deuxième couche (5) possède une épaisseur $e_2$ comprise entre 20nm et 50nm, notamment 30nm.

12. Guide optique selon l'une quelconque des revendications 1 à 11, **caractérisé en ce que** les murets (7) sont réalisés en silicium amorphe.

13. Guide optique selon la revendication 12, **caractérisé en ce que** les murets (7) sont réalisés en silicium amorphe hydrogéné.

14. Guide optique selon l'une quelconque des revendications 1 à 13, **caractérisé en ce que** pour une longueur d'onde autour des longueurs d'ondes de télécommunications, en particulier autour de $\lambda$ =1,55$\mu$m, les murets (7) possèdent une largeur w inférieure ou égale à 0,7$\mu$m comprise entre 0,5$\mu$m et 0,7$\mu$m, notamment 0,6$\mu$m en étant espacés entre 0,2$\mu$m et 5$\mu$m, notamment entre 1,6$\mu$m et 2$\mu$m, en particulier 1,75$\mu$m.

15. Guide optique selon l'une quelconque des revendications 1 à 14, **caractérisé en ce que** la hauteur h des murets (7) est $\lambda/10 \leq \underline{h} \leq \lambda/5$.

16. Guide optique selon la revendication 15, **caractérisé en ce que** pour une longueur d'onde autour des longueurs d'ondes de télécommunications, en particulier autour de $\lambda$ =1,55$\mu$m, la hauteur h des murets est comprise entre 150nm inclus et 250nm inclus, en particulier 200nm.

17. Guide optique selon l'une quelconque des revendications 1 à 3 et 5 à 16 ensemble avec la revendication 4, **caractérisé en ce que** la substance entre les murets (7) est un fluide liquide ou un fluide gazeux.

18. Guide optique selon l'une quelconque des revendications 1 à 17, **caractérisé en ce que** en qu'il comprend en outre un coupleur optique guide à guide (20).

19. Capteur de détection optique, **caractérisé en ce qu'**il comprend un guide optique (1) selon l'une quelconque des revendications 1 à 18.

20. Composant photonique **caractérisé en ce qu'**il comprend un guide optique (1) selon l'une quelconque des revendications 1 à 18.

**Patentansprüche**

1. Optischer Leiter (1), welcher eine Isolierschicht (9), eine erste Schicht (3) eines Materials mit einem Brechungsindex $n_1$, eine zweite Schicht (5) eines Materials mit einem Brechungsindex $n_2$ und einer Dicke $e_2$ und wenigstens eine erste und eine zweite Wand (7) mit einem Brechungsindex $n_3$ umfasst, wobei die erste Schicht (3) auf der Isolierschicht (9) angeordnet ist, die zweite Schicht (5) auf der ersten Schicht (3), und die Wände (7) auf der zweiten Schicht (5) angeordnet sind, eine Breite w besitzen und einen Abstand d voneinander aufweisen, wobei $n_4$ der Brechungsindex im Raum (E) zwischen den Wänden (7) und oberhalb der zweiten Schicht (5) ist, **dadurch gekennzeichnet, dass**:

   -
   $$(n_1 - n_2) \geq 0{,}1,$$
   -
   $$(n_3 - n_2) \geq 0{,}1,$$
   - $n_4 < n_3$,
   - $n_3\lambda/4 \leq \underline{w} \leq n_3\lambda/2$,
   - $n_4\lambda/10 \leq d \leq 3n_4\lambda$,
   - $e_2 \leq n_2\lambda/5$,
   - wobei $\lambda$ die Wellenlänge des Lichts ist, das dazu bestimmt ist, sich in dem optischen Leiter auszubreiten.

2. Optischer Leiter (1) nach Anspruch 1 für eine Wellenlänge in der Umgebung der Telekommunikationswellenlängen, insbesondere in der Umgebung von $\lambda$ = 1,55 $\mu$m, wobei

   - $n_1 \geq 3$,
   - $n_2 \leq 2{,}6$,
   - $n_3 \geq 3$,
   - 0,4 $\mu$m $\leq \underline{w} \leq$ 0,7 $\mu$m,
   - 0,2 $\mu$m $\leq \underline{d} \leq$ 5 $\mu$m,
   - $e_2 \leq$ 200 nm, insbesondere $e_2 \leq$ 100 nm.

3. Optischer Leiter nach Anspruch 1 oder 2, **dadurch gekennzeichnet, dass** für eine Wellenlänge in der Umgebung der Telekommunikationswellenlängen, insbesondere in der Umgebung von $\lambda$ = 1,55 $\mu$m, $n_4 \leq 1{,}5$ ist.

4. Optischer Leiter nach einem der Ansprüche 1 bis 3, **dadurch gekennzeichnet, dass** der Raum (E) zwischen den Wänden (7) und oberhalb der zweiten Schicht (5) dazu bestimmt ist, mit einem Stoff gefüllt zu werden.

**5.** Optischer Leiter nach einem der Ansprüche 1 bis 4, **dadurch gekennzeichnet, dass** die erste Schicht (3) eine Siliziumschicht umfasst.

**6.** Optischer Leiter nach Anspruch 5, **dadurch gekennzeichnet, dass** die erste Schicht (3) aus Silizium und die Isolierschicht (9) in Form einer SOI-Platte hergestellt sind.

**7.** Optischer Leiter nach einem der Ansprüche 1 bis 6, **dadurch gekennzeichnet, dass** die erste Schicht (3) eine Dicke $n_1\lambda/20 \leq e_1 \leq n_1\lambda/5$ besitzt.

**8.** Optischer Leiter nach einem der Ansprüche 1 bis 7, **dadurch gekennzeichnet, dass** die zweite Schicht (5) eine dielektrische Komponente aus der folgenden Gruppe umfasst: BTO, $Ta_2O_5$, $SiO_2$, $PbF_2$.

**9.** Optischer Leiter nach Anspruch 8, **dadurch gekennzeichnet, dass** die dielektrische Komponente mit Aluminium, Gallium oder Indium dotiert ist.

**10.** Optischer Leiter nach Anspruch 8 oder 9, **dadurch gekennzeichnet, dass** die zweite Schicht (5) eine Mischung von wenigstens zwei dielektrischen Komponenten umfasst, die aus der folgenden Gruppe gewählt sind: BTO, $Ta_2O_5$, $SiO_2$, $PbF_2$.

**11.** Optischer Leiter nach einem der Ansprüche 1 bis 10, **dadurch gekennzeichnet, dass** für eine Wellenlänge in der Umgebung der Telekommunikationswellenlängen, insbesondere in der Umgebung von $\lambda$ = 1,55 $\mu$m, die zweite Schicht (5) eine Dicke $e_2$ zwischen 20 nm und 50 nm, insbesondere von 30 nm, besitzt.

**12.** Optischer Leiter nach einem der Ansprüche 1 bis 11, **dadurch gekennzeichnet, dass** die Wände (7) aus amorphem Silizium hergestellt sind.

**13.** Optischer Leiter nach Anspruch 12, **dadurch gekennzeichnet, dass** die Wände (7) aus hydriertem amorphem Silizium hergestellt sind.

**14.** Optischer Leiter nach einem der Ansprüche 1 bis 13, **dadurch gekennzeichnet, dass** für eine Wellenlänge in der Umgebung der Telekommunikationswellenlängen, insbesondere in der Umgebung von $\lambda$ = 1,55 $\mu$m, die Wände (7) eine Breite w besitzen, die kleiner oder gleich 0,7 $\mu$m ist, zwischen 0,5 $\mu$m und 0,7 $\mu$m liegt, insbesondere 0,6 $\mu$m beträgt, wobei sie zwischen 0,2 $\mu$m und 5 $\mu$m, insbesondere zwischen 1,6 $\mu$m und 2 $\mu$m, insbesondere um 1,75 $\mu$m beabstandet sind.

**15.** Optischer Leiter nach einem der Ansprüche 1 bis 14, **dadurch gekennzeichnet, dass** für die Höhe h der Wände (7) gilt $\lambda/10 \leq h \leq \lambda/5$.

**16.** Optischer Leiter nach Anspruch 15, **dadurch gekennzeichnet, dass** für eine Wellenlänge in der Umgebung der Telekommunikationswellenlängen, insbesondere in der Umgebung von $\lambda$ = 1,55 $\mu$m, die Höhe h der Wände zwischen 150 nm einschließlich und 250 nm einschließlich liegt, insbesondere 200 nm beträgt.

**17.** Optischer Leiter nach einem der Ansprüche 1 bis 3 und 5 bis 16 zusammen mit Anspruch 4, **dadurch gekennzeichnet, dass** der Stoff zwischen den Wänden (7) ein flüssiges Fluid oder ein gasförmiges Fluid ist.

**18.** Optischer Leiter nach einem der Ansprüche 1 bis 17, **dadurch gekennzeichnet, dass** er außerdem einen Leiter-Leiter-Optokoppler (20) umfasst.

**19.** Sensor zur optischen Detektion, **dadurch gekennzeichnet, dass** er einen optischen Leiter (1) nach einem der Ansprüche 1 bis 18 umfasst.

**20.** Photonische Komponente, **dadurch gekennzeichnet, dass** sie einen optischen Leiter (1) nach einem der Ansprüche 1 bis 18 umfasst.

**Claims**

**1.** Optical guide (1) comprising an insulating layer (9), a first layer (3) of a material having a refractive index $n_1$, a second layer (5) of a material having a refractive index $n_2$ and a thickness $e_2$ and at least one first and second ridges (7) having a refractive index $n_3$, the first layer (3) being placed on the insulating layer (9), the second layer (5) on the first layer (3) and the ridges (7) being placed on the second layer (5), possessing a width w and being spaced apart by a distance d, $n_4$ being the refractive index in the space (E) between the ridges (7) and above the second layer (5), **characterized in that**:

-
$$(n_1 - n_2) \geq 0.1,$$

-
$$(n_3 - n_2) \geq 0.1,$$

- $n_4 < n_3$,
- $n_3\lambda/4 \leq w \leq n_3\lambda/2$,
- $n_4\lambda/10 \leq d \leq 3n_4\lambda$,
- $e_2 \leq n_2\lambda/5$,
- $\lambda$ being the wavelength of the light intended to propagate through the optical guide.

**2.** Optical guide (1) according to Claim 1, for a wavelength about telecommunication wavelengths, in particular about $\lambda = 1.55\ \mu$m, wherein

- $n_1 \geq 3$,
- $n_2 \leq 2.6$,
- $n_3 \geq 3$,
- $0.4\ \mu$m $\leq w \leq 0.7\ \mu$m,
- $0.2\ \mu$m $\leq \underline{d} \leq 5\ \mu$m,
- $e_2 \leq 200$ nm and notably $e_2 \leq 100$ nm.

**3.** Optical guide according to Claim 1 or 2, **characterized in that**, for a wavelength about telecommunication wavelengths, in particular $\lambda = 1.55\ \mu$m, $n_4 \leq 1.5$.

**4.** Optical guide according to any one of Claims 1 to 3, **characterized in that** the space (E) between the ridges (7) and above the second layer (5) is intended to be filled with a substance.

**5.** Optical guide according to any one of Claims 1 to 4, **characterized in that** the first layer (3) comprises a silicon layer.

**6.** Optical guide according to Claim 5, **characterized in that** the silicon first layer (3) and the insulating layer (9) are produced in the form of an SOI wafer.

**7.** Optical guide according to any one of Claims 1 to 6, **characterized in that** the first layer (3) possesses a thickness $n_1\lambda/20 \leq e_1 \leq n_1\lambda/5$.

**8.** Optical guide according to any one of Claims 1 to 7, **characterized in that** the second layer (5) comprises a dielectric component from the following group: BTO, $Ta_2O_5$, $SiO_2$, $PbF_2$.

**9.** Optical guide according to Claim 8, **characterized in that** the dielectric component is doped with aluminium, gallium or indium.

**10.** Optical guide according to Claim 8 or 9, **characterized in that** the second layer (5) comprises a mixture of at least two dielectric components chosen from the following group: BTO, $Ta_2O_5$, $SiO_2$, $PbF_2$.

**11.** Optical guide according to any one of Claims 1 to 10, **characterized in that**, for a wavelength about telecommunication wavelengths, in particular about $\lambda = 1.55\ \mu$m, the second layer (5) possesses a thickness $e_2$ comprised between 20 nm and 50 nm and notably of 30 nm.

**12.** Optical guide according to any one of Claims 1 to 11, **characterized in** the ridges (7) are made from amorphous silicon.

**13.** Optical guide according to Claim 12, **characterized in that** the ridges (7) are made from hydrogenated amorphous silicon.

**14.** Optical guide according to any one of Claims 1 to 13, **characterized in that**, for a wavelength about telecommunication wavelengths, in particular about $\lambda = 1.55\ \mu$m, the ridges (7) possess a width $\underline{w}$ smaller than or equal to 0.7 $\mu$m, comprised between 0.5 $\mu$m and 0.7 $\mu$m and notably of 0.6 $\mu$m while being spaced apart by between 0.2 $\mu$m and 5 $\mu$m, notably by between 1.6 $\mu$m and 2 $\mu$m and in particular by 1.75 $\mu$m.

**15.** Optical guide according to any one of Claims 1 to 14, **characterized in that** the height $\underline{h}$ of the ridges (7) is $\lambda/10 \leq \underline{h} \leq \lambda/5$.

**16.** Optical guide according to Claim 15, **characterized in that**, for a wavelength about telecommunication wavelengths, in particular about $\lambda = 1.55\ \mu$m, the height $\underline{h}$ of the ridges is comprised between 150 nm inclusive and 250 nm inclusive and is in particular 200 nm.

**17.** Optical guide according to any one of Claims 1 to 3 and 5 to 16 together with Claim 4, **characterized in that** the substance between the ridges (7) is a liquid fluid or a gaseous fluid.

**18.** Optical guide according to any one of Claims 1 to 17, **characterized in that** it furthermore comprises a guide-to-guide optical coupler (20).

**19.** Optical detecting sensor, **characterized in that** it comprises an optical guide (1) according to any one of Claims 1 to 18.

**20.** Photonic component, **characterized in that** it comprises an optical guide (1) according to any one of Claims 1 to 18.

## Fig.1

## Fig.7

## Fig.2

## Fig.3

# Fig.4

# Fig.5

Fig.6

**EP 3 314 319 B1**

## RÉFÉRENCES CITÉES DANS LA DESCRIPTION

### Documents brevets cités dans la description

- US 2004252957 A